# EUROPÄISCHE PATENTSCHRIFT

(11) **EP 1 882 351 B1**
(45) Veröffentlichungstag und Bekanntmachung des Hinweises auf die Patenterteilung: **08.08.2018**
(21) Anmeldenummer: 06707176.1
(22) Anmeldetag: 22.02.2006
(51) Int. Cl.: H04M 1/247, H04M 1/725

(54) **BETRIEB EINES IN EINEM TELEKOMMUNIKATIONSNETZ NUTZBAREN ENDQERÄTES**
OPERATION OF A TERMINAL DEVICE THAT CAN BE USED IN A TELECOMMUNICATION NETWORK
FONCTIONNEMENT D'UN TERMINAL UTILISABLE DANS UN RESEAU DE TELECOMMUNICATIONS

(30) Priorität: 20.05.2005 DE 102005023960
(43) Veröffentlichungstag der Anmeldung: 30.01.2008
(73) Patentinhaber: Vodafone Holding GmbH, 40213 Düsseldorf (DE)
(72) Erfinder: FOLEY, Peter, St. Albans, AL3 5LG (GB); TOLLEMACHE, Luke, Oxford, OX41YB (GB); LAW, Kwan, 40468 Düsseldorf (DE); LAURENCE, Guy, SL9 8LL, London (GB); WEISS, Scott, New York, 10014 (US)
(74) Vertreter: Weisbrodt, Bernd
(86) Internationale Anmeldenummer: PCT/EP2006/001613
(87) Internationale Veröffentlichungsnummer: WO 2006/122593

(56) Entgegenhaltungen:
- EP-A- 1 309 158
- EP-A- 1 434 411
- EP-A- 1 513 354
- US-A1- 2003 157 970
- US-B1- 6 519 482
- PATENT ABSTRACTS OF JAPAN Bd. 2000, Nr. 22, 9. März 2001 (2001-03-09) & JP 2001 147797 A (SANYO ELECTRIC CO LTD), 29. Mai 2001 (2001-05-29)

## Beschreibung

Die vorliegende Erfindung betrifft ein Verfahren zum Betreiben eines in einem Telekommunikationsnetz, vorzugsweise einem Mobilfunknetz, nutzbaren Endgerätes, welches eine Anzeigeeinrichtung zur optischen und/oder akustischen Wiedergabe von Informationen und wenigstens eine Eingabeeinrichtung zur Erfassung von Informationen aufweist, wobei zu endgeräteseitig zur Verfügung stehenden Funktionen und/oder Anwendungen deren Nutzungs- und/oder Bedienmöglichkeiten erläuternde Informationen bei Bedarf seitens der Anzeigeeinrichtung wiedergegeben werden. Ferner betrifft die vorliegende Erfindung ein Endgerät zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, zu endgeräteseitig zur Verfügung stehenden Informationen und/oder Anwendungen deren Nutzungs- und/oder Bedienmöglichkeiten erläuternde Informationen bei Bedarf seitens der Anzeigeeinrichtung wiedergebbar sind.

Derartige Verfahren und Endgeräte sind im Stand der Technik in zahlreichen Ausführungsformen und Ausgestaltungen bekannt, insbesondere von in digitalen zellularen Mobilfunknetzen nutzbaren Mobilfunktelefonen gemäß dem GSM- oder UMTS-Funknetzstandard (GSM: Global System for Mobile Communications; UMTS: Universal Mobile Telecommunications System).

Neben einer herkömmlichen Kommunikation durch Telefonieren ermöglichen derartige Verfahren und Endgeräte die Nutzung weiterer Funktionen und/oder Anwendungen, insbesondere von in Telekommunikationsnetzen bereitgestellten weiteren Diensten wie SMS (SMS: Short Messages Service), MMS (MMS: Multimedia Messages Service) oder dergleichen Dienste. Endgeräteseitig stehen dazu verschiedene Funktionen und/oder Anwendungen mit entsprechenden Nutzungs- und/oder Bedienmöglichkeiten zur Verfügung. Darüber hinaus stehen endgeräteseitig als Funktionen und/oder Anwendungen mit entsprechenden Nutzungs- und/oder Bedienmöglichkeiten als Anwendungsprogramme seitens der Endgeräte ausführbare Terminplaner, Musikwiedergabeeinrichtungen, beispielsweise sogenannte MP3-Player, digitale Kamerafunktionalitäten und dergleichen Anwendungen zur Verfügung.

Entsprechende Funktionen und/oder Anwendungen als auch mit beziehungsweise von diesen nutzbare beziehungsweise verarbeitbare Informationen, insbesondere Kommunikationsinformationen wie Name, Rufnummer (MSISDN), Kommunikationszeitpunkt, -art und dergleichen Informationen, bringen seitens der Endgeräte in Abhängigkeit von Art und/oder Umfang entsprechend umfangreiche und aufwändige Nutzungs- und/oder Bedienmöglichkeiten mit sich. Insbesondere aufgrund der gesteigerten Leistungsfähigkeit von in Mobilfunknetzen betreibbaren Mobilfunktelefonen stehen endgeräteseitig derart umfangreiche und komplexe Funktionen- und/oder Anwendungen mit entsprechenden Nutzungs- und/oder Bedienmöglichkeiten zur Erfassung und/oder Wiedergabe von optischen und/oder akustischen Informationen zur Verfügung, dass Nutzer entsprechender Endgeräte diese in der Regel ohne Bedienungsanleitung und/oder entsprechender Hilfestellung nicht beziehungsweise nur unzureichend in der Lage sind, diese sach- und funktionsgerecht zu nutzen.

Die endgeräteseitig zur Verfügung stehenden Funktionen und/oder Anwendungen weisen darüber hinaus mitunter derart umfangreiche und insbesondere für ältere und/oder ungeübte Nutzer nicht beziehungsweise nur schwer verständliche Nutzungs- und/oder Bedienmöglichkeiten bereitstellende Menüführungen auf, dass nutzerseitig von einer Nutzung entsprechender Funktionen und/oder Anwendungen abgesehen wird beziehungsweise die nur unzureichend erfolgt.

Im Stand der Technik sind Mobilfunktelefone bekannt, bei denen zu endgeräteseitig zur Verfügung stehenden Funktionen und/oder Anwendungen deren Nutzungs- und/oder Bedienmöglichkeiten erläuternde Informationen bei Bedarf seitens der Anzeigeeinrichtung wiedergebbar sind. Die seitens der bisher bekannten Mobilfunktelefone bereit gestellte Hilfefunktionalität ist äußerst eingeschränkt, insbesondere da entsprechende Bedienungsanleitungen sehr umfangreich sein können, und wobei die Wiedergabe seitens der Anzeigeeinrichtung der Mobilfunktelefone ist ferner auf eine rein graphische Textwiedergabe seitens der zur optischen Wiedergabe von Informationen in der Regel als sogenanntes Display ausgebildeten Anzeigeeinrichtung beschränkt. Die Textwiedergabe erfolgt dabei in normaler Schriftgröße und ist dementsprechend insbesondere für ältere Nutzer aufgrund der in der Regel beschränkten Displaygröße nur schwer beziehungsweise gar nicht lesbar. Ferner ist der Umfang der Hilfetexte zur Erläuterung von zur Verfügung stehenden Informationen und/oder Anwendungen beziehungsweise deren Nutzungs- und/oder Bedienmöglichkeiten bisher äußerst minimal und dementsprechend unzureichend insbesondere um Speicherplatz einzusparen. Auch ist die Bestimmung des Bedarfs bisher auf ein bloßes Aktivieren beziehungsweise Deaktivieren der Hilfefunktionalität in einem Menü mit einer entsprechenden Menüführung seitens der Mobilfunktelefone realisiert. Dementsprechend umständlich und unkomfortabel ist die Bedienung und/oder Handhabung der bisher bekannten Hilfefunktionalität, insbesondere für ältere und/oder ungeübte Nutzer.

Aus der EP 1 513 354 A1 ist eine tragbare Kommunikationsvorrichtung bekannt, welche die Bereitstellung von zusätzlicher Information in Bezug auf Elemente ermöglicht, die einem Benutzer der tragbaren Kommunikationsvorrichtung präsentiert werden, sowie ein Verfahren, eine Hilfsdienstvorrichtung und ein System, welche zusätzliche Informationen in Bezug auf solche Gegenstände bereitstellen, die einem Benutzer eines tragbaren Kommunikationsgeräts präsentiert werden. Dabei wird eine Anzahl von Punkten angezeigt und eine Hilfefunktion für den Benutzer auf dem Display der tragbaren Kommunikationsvorrichtung bereitgestellt. Wenn der Benutzer die Hilfefunktion für einen bestimmten Gegenstand auswählt, wird automatisch eine Sprachverbindung zu der Hilfsdienstvorrichtung hergestellt, damit der Benutzer zusätzliche mündliche Informationen bezüglich des bestimmten Gegenstandes erhält.

Die EP 1 434 411 A1 offenbart ein tragbares elektronisches Gerät zum Bereitstellen weiterer Informationen bezüglich des Status eines tragbaren elektronischen Geräts, umfassend eine Informationspräsentationseinheit mit mindestens einer ersten Benutzereingabeeinheit und einer Steuereinheit. Die Steuereinheit stellt eine Statusinformation auf der Informationspräsentationseinheit bereit, welche sich auf die Leistung der tragbaren elektronischen Vorrichtung oder möglicherweise aktivierter Anwendungen und Funktionen in der Vorrichtung bezieht. Bei Erkennen einer Auswahl von weiteren Informationen über die Benutzereingabeeinheit liefert die Informationspräsentationseinheit gleichzeitig begrenzte weitere Informationen bezüglich der Statusinformation.

Die US 6,519,482 B1 betrifft ein Mobiltelefon, welches Benutzerinformationen auf einem Display anzeigt. Das Mobiltelefon zeigt ein Informationssymbol auf dem Display an, wenn Hilfeinformationen verfügbar sind, die sich auf die Benutzerinformationen auf dem Display beziehen. Das Mobiltelefon erzeugt ein Steuersignal, wenn eine Informationstaste auf dem Mobiltelefon aktiviert ist und zeigt die Hilfsinformation auf der Anzeige als Reaktion auf die Erzeugung des Steuersignals an, wenn das Informationssymbol angezeigt wird.

Die US 2003/0157970 A1 offenbart ein Kommunikationsendgerät mit einer Benutzerschnittstelle, umfassend eine Steuereinheit, welche die Benutzerschnittstelle steuert, eine erste und eine zweite Bedienungstaste, deren Betrieb von der Steuereinheit gesteuert wird, und eine Anzeige. Das Kommunikationsendgerät kann eine Vielzahl von Zuständen annehmen, in denen die Gruppen von vorbestimmten Operationen, welche durch Drücken der Betätigungstaste ausgeführt werden können, durch die Steuereinheit in der Mehrzahl von Zuständen definiert sind. Die erste Bedientaste ist durch die Steuereinheit die Funktion zugeteilt, eine Operation von der Gruppe von Operationen als eine Standardfunktion in Abhängigkeit von dem von dem Kommunikationsendgerät angenommenen Zustand auszuführen, wobei die Anzeige einen ersten Bereich aufweist, der ausschließlich dazu dient, die gerade durchgeführte Operation anzuzeigen, wenn die erste Bedientaste gedrückt wird. Die zweite Bedientaste wird von der Steuereinheit die Funktion zugewiesen, einen Zugriff auf die Gruppe von Betriebsvorgängen zu ermöglichen, die in dem vom Kommunikationsendgerät angenommenen Zustand verfügbar
sind. Eine Scrolltaste erlaubt es einem Benutzer, zwischen den Operationen zu blättern, die in der Gruppe von Aktionen enthalten sind, die für die zweite Bedientaste verfügbar sind, wobei ein Benutzer durch Drücken einer Auswahltaste eine hervorgehobene Operation auswählt.

Im Anbetracht dieses Standes der Technik liegt der vorliegenden Erfindung die **Aufgabe** zugrunde, ein Verfahren zum Betreiben eines in einem Telekommunikationsnetz, vorzugsweise einem Mobilfunknetz, nutzbaren Endgerätes der eingangs genannten Art, als auch ein Endgerät zur Nutzung in einem Telekommunikationsnetz, vorzugsweise einem Mobilfunknetz, der eingangs genannten Art unter Meidung der beschriebenen Nachteile hinsichtlich der Wiedergabe von Nutzungs- und/oder Bedienmöglichkeiten erläuternden Informationen zu endgeräteseitig zur Verfügung stehenden Informationen und/oder Anwendungen seitens der Anzeigeeinrichtung zu verbessern, insbesondere derart, dass für ältere und/oder ungeübte Nutzer eine einfache, verständliche und weniger umständliche Bedien- beziehungsweise Handhabbarkeit der Nutzungs- und/oder Bedienmöglichkeiten erläuternden Informationen ermöglicht wird.

Zur technischen **Lösung** dieser Aufgabe wird mit der vorliegenden Erfindung ein Verfahren zum Betreiben eines in einem Telekommunikationsnetz, vorzugsweise einem Mobilfunknetz, nutzbaren Endgerätes, welches eine Anzeigeeinrichtung zur optischen und/oder akustischen Wiedergabe von Informationen und wenigstens eine Eingabeeinrichtung zur Erfassung von Informationen aufweist, wobei zu endgeräteseitig zur Verfügung stehenden Informationen und/oder Anwendungen deren Nutzungs- und/oder Bedienmöglichkeiten erläuternde Informationen bei Bedarf seitens der Anzeigeeinrichtung wiedergegeben werden, vorgeschlagen, bei dem der Bedarf in Abhängigkeit von und/oder aus dem jeweiligen nutzerindividuellen Nutzungskontext bestimmt wird, wobei die Bedarfsbestimmung hinsichtlich der jeweiligen Bedürfnisse eines Nutzers nach Hilfe bezüglich zur Verfügung stehender Informationen und/oder Anwendungen erfolgt, und der Bedarf prognostizierend bestimmt wird, wobei im Rahmen der prognostizierenden Bedarfsbestimmung ein aktives Betätigen als auch ein zu langes Nichtbetätigen in bestimmten endgeräteseitig zur Verfügung stehenden Funktionen und/oder Anwendungen seitens der Eingabeeinrichtung berücksichtigt wird.

Der vorliegenden Erfindung liegt die Erkenntnis zugrunde, dass eine insbesondere für ältere und/oder ungeübte Nutzer verbesserte Hilfefunktionalität realisiert werden kann, wenn der Bedarf zur Wiedergabe von Nutzungs- und/oder Bedienmöglichkeiten erläuternden Informationen zu endgeräteseitig zur Verfügung stehenden Funktionen und/oder Anwendungen in Abhängigkeit von und/oder aus dem jeweiligen Nutzungskontext des Nutzers bestimmt wird. So ist zum einen eine Individualisierung und damit insbesondere auf den Nutzer zugeschnittene Wiedergabe von Hilfefunktionalitäten gegeben, die den jeweiligen Bedürfnissen nach Hilfe zu endgeräteseitig zur Verfügung stehenden Informationen und/oder Anwendungen nachkommt. Von einem Nutzer eines entsprechenden Endgerätes häufiger genutzte und damit hinsichtlich der Nutzungs- und/oder Bedienmöglichkeiten dem Nutzer vertrautere Informationen und/oder Anwendungen werden beispielsweise seitens des Endgerätes erkannt und entsprechende Hilfefunktionalitäten hinsichtlich des Bedarfs nach denselben seitens des Nutzers weniger gewichtet beziehungsweise priorisiert. Weniger häufig von einem Nutzer eines Endgerätes genutzte Funktionen und/oder Anwendungen weisen dementsprechend beispielsweise eine hinsichtlich des Bedarfs nach Hilfefunktionalitäten höhere Gewichtung beziehungsweise Priorisierung auf und werden dementsprechend hinsichtlich eines gesteigerten Bedarfs nach Hilfefunktionalitäten endgeräteseitig schneller und/oder häufiger und/oder umfangreicher wiedergegeben. Das Endgerät lernt quasi die Nutzungsfähigkeiten des jeweiligen Nutzers hinsichtlich dessen Bedien- und/oder Handhabbarkeit des Endgerätes beziehungsweise dessen Funktionen und/oder Anwendungen mit. Zur Realisierung dieser Funktionalität können entsprechende Informationen hinsichtlich des nutzerindividuellen Nutzungskontextes mit einem sogenannten "Crawler" oder dergleichen Protokollier- und/oder Auswertungsanwendung beziehungsweise Vorrichtung erfolgen, welche vorteilhafterweise im Hintergrund von Seiten des Endgerätes ausgeführten Anwendungen deren Nutzungs- und/oder Bedienmöglichkeiten als auch den Bedarf nach Hilfe des Nutzers erfasst und mit einer entsprechenden Gewichtung beziehungsweise Priorisierung versieht.

Vorteilhafterweise werden entsprechend erfasste Informationen hinsichtlich des nutzerindividuellen Nutzungskontextes seitens einer sogenannten SIM-Chipkarte beziehungsweise USIM-Chipkarte (SIM: Subscriber Identity Module; USIM: Universal Subscriber Identity Module) durch Speicherung seitens einer Speichereinrichtung derselben erfasst. So ist der jeweils nutzerindividuelle Nutzungskontext von dem Nutzer vorteilhafterweise bei Wechsel des Endgerätes auf andere Endgeräte übertragbar beziehungsweise mit diesen entsprechend nutzbar und/oder berücksichtigbar. Die Möglichkeit, den Bedarf in Abhängigkeit von und/oder aus dem jeweiligen nutzerindividuellen Nutzungskontext heraus zu bestimmen, geht weit über die bisher im Stand der Technik bekannten Hilfefunktionalitäten, wie sie insbesondere seitens Mobilfunktelefonen gegeben sind, hinaus, insbesondere da demgegenüber erfindungsgemäß nicht lediglich ein einfaches Aktivieren oder Deaktivieren entsprechender Hilfefunktionalitäten gegeben ist.

In einer weiteren Ausgestaltung der Erfindung wird der Bedarf prognostizierend bestimmt. Eine prognostizierende Bedarfsbestimmung ermöglicht vorteilhafterweise schon während entsprechender Betätigungseingaben seitens der Eingabeeinrichtung, die durch ein aktives Betätigen als auch durch ein zu langes nicht Betätigen in bestimmten endgeräteseitig zur Verfügung stehenden Funktionen und/oder Anwendungen gegeben sein kann, ob und welche Funktion und/oder Anwendung der Nutzer ausführen möchte, sowie ob und/oder welcher Art eine entsprechende Hilfestellung durch entsprechende Wiedergabe von Nutzungs- und/oder Bedienmöglichkeiten erläuternden Informationen seitens der Anzeigeeinrichtung der Nutzer wahrscheinlich benötig. Je umfangreicher, häufiger und länger ein Nutzer einen entsprechenden Nutzungskontext endgeräteseitig und/oder seitens einer SIM-Chipkarte beziehungsweise USIM-Chipkarte genutzt hat, desto besser und präziser wird eine entsprechende prognostizierende Bedarfsbestimmung erfolgen. Das Endgerät lernt also quasi mit. Vorteilhafterweise wird der Nutzungskontext durch Erfassung endgeräteseitig erfolgender Funktions- und/oder Anwendungsnutzungen bestimmt. Dabei werden gemäß einer weiteren vorteilhaften Ausgestaltung der Erfindung endgeräteseitig erfolgende Funktions- und/oder Anwendungsnutzungen nach Zeit, Ort, Nutzungsreihenfolge und/oder Nutzungshäufigkeit erfasst. Weitere Funktions- und/oder Anwendungsnutzungen berücksichtigen vorteilhafterweise Kommunikationspartner eines Nutzers und im Zusammenhang mit diesem erfolgte Funktions- und/oder Anwendungsnutzungen. So sind vorteilhafterweise Funktions- und/oder Nutzungsvorlieben eines Nutzers hinsichtlich des Bedarfs nach Hilfefunktionalitäten berücksichtigbar, wodurch entsprechende Hilfefunktionalitäten weiter verbesserbar sind. Vorteilhafterweise erfolgt im Rahmen einer prognostizierenden Bedarfsbestimmung wenigstens ein Vergleich von zur Verfügung stehenden Nutzungs- und Bedienmöglichkeiten von Funktionen und/oder Anwendungen mit erfassten Funktions- und/oder Anwendungsnutzungen. Dadurch ist die prognostizierende Bedarfsbestimmung hinsichtlich ihrer Leistungsfähigkeit weiter verbesserbar, da nicht mögliche beziehungsweise nicht vorgesehene Nutzungs- und/oder Bedienmöglichkeiten von Funktionen und/oder Anwendungen, insbesondere solche, die für den Nutzer von geringer beziehungsweise keiner Bedeutung sind, keine beziehungsweise nur sehr geringe Berücksichtigung finden.

In einer weiteren vorteilhaften Ausgestaltung der Erfindung wird eine Wiedergabe der erläuternden Informationen durch Betätigung der Eingabeeinrichtung bewirkt und/oder ausgelöst. Erfindungsgemäß kann der Nutzer so vorteilhafterweise aktiv durch eine entsprechende Betätigung der Eingabeeinrichtung im Zusammenhang mit Funktions- und/oder Anwendungsnutzungen entsprechende Hilfefunktionalitäten durch erläuternde Informationen zu Bedien- und/oder Nutzungsmöglichkeiten von endgeräteseitig zur Verfügung stehenden Funktionen und/oder Anwendungen vornehmen.

In einer weiteren vorteilhaften Ausgestaltung der Erfindung wird eine automatische Wiedergabe der erläuternden Informationen mit und/oder nach erfolgter Bedarfsbestimmung bewirkt und/oder ausgelöst. Erfindungsgemäß werden dabei entsprechende Hilfefunktionalitäten durch Wiedergabe von erläuternden Informationen seitens der Anzeigeeinrichtung wiedergegeben, ohne dass der Nutzer in der jeweiligen Nutzungssituation eine aktive Betätigungseingabe seitens der Eingabeeinrichtung vornehmen muss. Die Wiedergabe der erläuternden Informationen erfolgt dabei vorteilhafterweise hinsichtlich Art, Umfang und/oder Dauer entsprechend dem bestimmten nutzerindividuellen Bedarf nach entsprechender Hilfefunktionalität.

In einer weiteren besonders vorteilhaften Ausgestaltung der Erfindung wird die Wiedergabe der erläuternden Informationen ohne ein zusätzliches Menü und/oder eine zusätzliche Menüführung ausgelöst und/oder bewirkt. Die Bedienung und/oder Handhabung der entsprechenden Hilfefunktionalitäten ist so insbesondere für ältere und/oder ungeübte Nutzer weiter vereinfachbar. Darüber hinaus können Nutzer so erfindungsgemäß an die Nutzung und/oder Handhabung beziehungsweise Bedienung der erfindungsgemäß realisierten Hilfefunktionalität gewöhnt werden, so dass eine entsprechende Nutzung von endgeräteseitig zur Verfügung stehenden Informationen und/oder Anwendungen häufiger und gewohnheitsmäßiger erfolgen kann.

In einer besonders vorteilhaften Ausgestaltung der Erfindung erfolgt die Wiedergabe der erläuternden Informationen optisch und/oder akustisch, wobei die optische Wiedergabe vorzugsweise in graphisch animierter Form und/oder in einer gegenüber sonstigen endgeräteseitig erfolgenden graphischen Wiedergaben vergrößerten Form und/oder anderen Farbe beziehungsweise Farbkombinationen erfolgt. Durch diese erfindungsgemäßen Maßnahmen, einzeln und/oder in Kombination miteinander, ist die Bedien- beziehungsweise Handhabbarkeit entsprechender Hilfefunktionalitäten weiter vereinfacht, was insbesondere für ungeübte und/oder ältere Nutzer von Vorteil ist. Das zur Verfügung stehen von entsprechenden Hilfefunktionalitäten kann so vorteilhafterweise dem Nutzer einfacher und transparenter signalisiert und von diesem entsprechend vereinfacht genutzt werden.

Vorteilhafterweise weist die Eingabeeinrichtung des Endgerätes wenigstens eine Taste auf, die bei Betätigung eine Wiedergabe der erläuternden Informationen bewirkt und/oder auslöst. Vorteilhafterweise ist die Taste ausschließlich zur Auslösung und/oder Bewirkung der Wiedergabe erläuternder Informationen entsprechend der jeweils zur Verfügung stehenden Hilfefunktionalität funktionalisiert. Erfindungsgemäß werden so ansonsten erforderliche umfangreiche und/oder aufwändige Tasteneingaben seitens einer Eingabeeinrichtung des Endgerätes entbehrlich und die Bedienung und/oder Handhabung zur Wiedergabe erläuternder Informationen entsprechend einer erfindungsgemäßen Hilfefunktionalität weiter vereinfacht, insbesondere für ältere und/oder ungeübte Nutzer. Vorteilhafterweise ist die eine entsprechende Auslösung und/oder Bewirkung ermöglichende Taste der Eingabeeinrichtung zur Bewirkung einer Wiedergabe entsprechender erläuternder Informationen derart ausgebildet, dass diese ihre Farbe hinsichtlich der Nutzung erläuternder Informationen zu endgeräteseitig zur Verfügung stehenden Funktionen und/oder Anwendungen verändert. Die Veränderung der Farbe der Taste der Eingabeeinrichtung signalisiert dem Nutzer dabei vorteilhafterweise sowohl die Bedienmöglichkeit zur Wiedergabe der erläuternden Informationen einer erfindungsgemäßen Hilfefunktionalität als auch die zu betätigende Taste für eine entsprechende Auslösung beziehungsweise Bewirkung der Hilfefunktionalität selbst, wodurch die Bedien- beziehungsweise Handhabbarkeit des Endgerätes hinsichtlich der zur Verfügung stehenden Hilfefunktionalität weiter vereinfachbar ist. In einer besonders bevorzugten Ausgestaltung der Erfindung ist die entsprechende Taste der Eingabeeinrichtung des Endgerätes vorteilhafterweise farbig beleuchtbar und sind entsprechende Bedienmöglichkeiten zur Bewirkung und/oder Auslösung der erfindungsgemäßen Hilfefunktionalitäten durch verschiedene Leuchtfarben und/oder Blinklichtkombinationen dem Nutzer signalisierbar.

In einer besonders vorteilhaften Ausgestaltung der Erfindung erfolgt die Betätigung der Eingabeeinrichtung des Endgerätes akustisch, vorzugsweise durch Spracheingabe. Bei entsprechender Funktionalität des Endgerätes können erfindungsgemäß ansonsten erforderliche umfangreiche und/oder aufwändige Tasteneingaben seitens des Endgerätes entfallen.

Vorteilhafterweise sind und/oder werden die erläuternden Informationen einer erfindungsgemäßen Hilfefunktionalität seitens des Endgerätes gespeichert, vorzugsweise seitens einer fest im Endgerät implementierten Speichereinrichtung und/oder einer austauschbar in das Endgerät einsetzbaren Speichereinrichtung. Eine entsprechende Hilfefunktionalität kann so beispielsweise auf einer Speichereinrichtung als Zubehör zu entsprechenden Endgeräten vertrieben werden.

In einer besonders vorteilhaften Ausgestaltung der Erfindung weisen die erläuternden Informationen zumindest teilweise wenigstens eine auswählbare Verknüpfung zu Nutzungs- und/oder Bedienmöglichkeiten der endgeräteseitig zur Verfügung stehenden Funktionen und/oder Anwendungen erläuternden Informationen seitens einer Datenbank des Telekommunikationsnetzes auf, wobei die erläuternden Informationen in der Datenbank bei Auswahl der Verknüpfung mittels des eines Dienstes Telekommunikationsnetzes an das Endgerät übertragen und seitens der Anzeigeeinrichtung des Endgerätes wiedergegeben werden. Die Verknüpfung ist vorteilhafterweise ein sogenannter "Link" oder "Hyperlink" zu einer Datenbank, welche entsprechende weitergehende erläuternde Informationen zur Ergänzung der erfindungsgemäßen Hilfefunktionalität enthält. Eine entsprechende über das Telekommunikationsnetz zugängliche Datenbank kann vorteilhafterweise von dem Telekommunikationsnetzbetreiber und/oder einem Endgerätehersteller oder dergleichen Serviceanbieter betrieben und gewartet werden. Bei Auswahl der Verknüpfung durch entsprechende Aktivierungs- beziehungsweise Betätigungseingabe seitens des Endgerätes durch den Nutzer, vorteilhafterweise durch Betätigung wenigstens einer entsprechenden Taste und/oder durch Spracheingabe seitens des Endgerätes, werden die entsprechend verknüpften weitergehenden erläuternden Informationen von der Datenbank über das Telekommunikationsnetz auf das Endgerät übertragen und seitens der Anzeigeeinrichtung optisch und/oder akustisch wiedergegeben. Erfindungsgemäß kann so die Hilfefunktionalität ergänzt und/oder erweitert werden. Darüber hinaus sind so entsprechende Dienste des Telekommunikationsnetzes hinsichtlich deren Nutzung weiter steigerbar, insbesondere im Zusammenhang mit sogenannten Mehrwertdiensten. Vorteilhaferweise werden die weitergehenden erläuternden Informationen mittels SMS und/oder MMS auf das Endgerät übertragen.

Gemäß einer weiteren vorteilhaften Ausgestaltung der Erfindung ist das erfindungsgemäße Verfahren als Anwendungsprogramm auf das Endgerät übertragbar und seitens des Endgerätes ausführbar. Bei entsprechender Ausgestaltung des Endgerätes lässt sich so die Funktionalität des erfindungsgemäßen Verfahrens seitens eines entsprechenden Endgerätes vorteilhafterweise nachrüsten, beispielsweise durch Aufspielen des Anwendungsprogramms über das Telekommunikationsnetz oder dergleichen Verbindungen und/oder entsprechende mit dem Endgerät verbindbare Einrichtungen, beispielsweise einem PC oder dergleichen Recheneinrichtungen.

Zur technischen **Lösung** der eingangs genannten Aufgabe wird mit der vorliegenden Erfindung ferner ein Endgerät zur Nutzung in einem Telekommunikationsnetz, vorzugsweise einem Mobilfunknetz, mit einer Anzeigeeinrichtung zur optischen und/oder akustischen Wiedergabe von Informationen und wenigstens einer Eingabeeinrichtung zur Erfassung von Informationen, wobei zu endgeräteseitig zur Verfügung stehenden Funktionen und/oder Anwendungen deren Nutzungs- und/oder Bedienmöglichkeiten erläuternde Informationen bei Bedarf seitens der Anzeigeeinrichtung wiedergebbar sind, bereit gestellt, wobei das Endgerät (1) dazu ausgebildet ist, den Bedarf in Abhängigkeit von und/oder aus dem jeweiligen nutzerindividueller Nutzungskontext, hinsichtlich der jeweiligen Bedürfnisse eines Nutzers nach Hilfe bezüglich zur Verfügung stehender Informationen und/oder Anwendungen, zu bestimmen, wobei das Endgerät dazu ausgebildet ist, den Bedarf prognostizierend zu bestimmen, wobei im Rahmen der prognostizierenden Bedarfsbestimmung ein aktives Betätigen als auch ein zu langes Nichtbetätigen in bestimmten endgeräteseitig zur Verfügung stehenden Funktionen und/oder Anwendungen seitens der Eingabeeinrichtung berücksichtigt wird.

Vorteilhafterweise ist der Bedarf prognostizierend bestimmbar. In einer weiteren vorteilhaften Ausgestaltung der Erfindung ist der Nutzungskontext durch Erfassung endgeräteseitig erfolgender Funktions- und/oder Anwendungsnutzungen bestimmbar. Vorteilhafterweise sind endgeräteseitig erfolgende Funktions- und/oder Anwendungsnutzungen nach Zeit, Ort, Nutzungsreihenfolge und/oder Nutzungshäufigkeit erfassbar.

Vorteilhafterweise erfolgt im Rahmen einer prognostizierenden Bedarfsbestimmung wenigstens ein Vergleich von zur Verfügung stehenden Nutzungs- und/oder Bedienmöglichkeiten von Funktionen und/oder Anwendungen mit erfassten Funktions- und/oder Anwendungsnutzungen.

Eine besonders vorteilhafte Ausgestaltung der Erfindung sieht vor, dass eine Wiedergabe der erläuternden Informationen durch Betätigung der Eingabeeinrichtung bewirkbar und/oder auslösbar ist.

In einer weiteren vorteilhaften Ausgestaltung der Erfindung ist eine automatische Wiedergabe der erläuternden Informationen mit und/oder nach erfolgter Bedarfsbestimmung bewirkbar und/oder auslösbar.

Vorteilhafterweise ist die Wiedergabe der erläuternden Informationen endgeräteseitig ohne ein zusätzliches Menü und/oder eine zusätzliche Menüführung auslösbar und/oder bewirkbar.

In einer besonders vorteilhaften Ausgestaltung der Erfindung erfolgt die Wiedergabe der erläuternden Informationen optisch und/oder akustisch, wobei die optische Wiedergabe vorzugsweise in graphisch animierter Form und/oder in einer gegenüber sonstigen graphischen Wiedergaben vergrößerten Form und/oder anderen Farbe beziehungsweise Farbkombination erfolgt. In einer weiteren vorteilhaften Ausgestaltung der Erfindung weist die Eingabeeinrichtung des erfindungsgemäßen Endgerätes wenigstens eine Taste auf, die bei Betätigung eine Wiedergabe der erläuternden Informationen bewirkt und/oder auslöst. Vorteilhafterweise ist die erfindungsgemäße Taste der Eingabeeinrichtung des erfindungsgemäßen Endgerätes ausschließlich zur Wiedergabe der erläuternden Informationen der erfindungsgemäßen Hilfefunktionalität funktionalisiert. Erfindungsgemäß wird so die Bedienung und/oder Handhabung einer erfindungsgemäßen Hilfefunktionalität weiter vereinfacht, insbesondere für ungeübte und/oder ältere Nutzer. Vorteilhafterweise ist die Farbe der wenigstens einen Taste veränderbar. Die Veränderung der Farbe der Taste der Eingabeeinrichtung signalisiert dem Nutzer vorteilhafterweise sowohl die Bedienmöglichkeit zur erfindungsgemäßen Hilfefunktionalität als auch die zu betätigende Taste für eine entsprechende Hilfefunktionalität, wodurch die Bedien- beziehungsweise Handhabbarkeit des Endgerätes weiter vereinfachbar ist.

Zur weiteren Verbesserung der Bedien- beziehungsweise Handhabbarkeit des Endgerätes ist die wenigstens eine eine erfindungsgemäße Hilfefunktionalität durch Betätigung ermöglichende Taste der Eingabeeinrichtung vorteilhafterweise hinsichtlich ihrer Abmessungen größer ausgebildet, als die einzelnen weiteren zur Erfassung von Informationen durch Betätigung nutzbaren Tasten der Eingabeeinrichtung des Endgerätes. In einer konkreten Ausgestaltung der Erfindung ist die wenigstens eine eine erfindungsgemäße Hilfefunktionalität durch Betätigung ermöglichende Taste der Eingabeeinrichtung hinsichtlich ihrer Abmessungen in etwa viermal so groß ausgebildet, wie die einzelnen weiteren zur Erfassung von Informationen durch Betätigung nutzbaren Tasten der Eingabeeinrichtung. In einer besonders bevorzugten Ausgestaltung der Erfindung ist die wenigstens eine Taste der Eingabeeinrichtung von einer zumindest teilweise berührungssensitiven Anzeigeeinrichtung ausgebildet, welche vorzugsweise zumindest teilweise Bestandteil der Anzeigeeinrichtung zur optischen Wiedergabe von Informationen ist. Die zumindest teilweise berührungssensitive Anzeigeeinrichtung ist dabei vorteilhafterweise als ein sogenanntes "Touchscreen" ausgebildet.

Zur weiteren Vereinfachung der Bedien- und/oder Handhabbarkeit einer erfindungsgemäßen Hilfefunktionalität ist die wenigstens eine, eine erfindungsgemäße Hilfefunktionalität durch Betätigung ermöglichende Taste der Eingabeeinrichtung von weiteren zur Erfassung von Informationen durch Betätigung nutzbaren Tasten der Eingabeeinrichtung derart beabstandet und/oder an anderen Gehäuseseiten angeordnet, dass sich zwischen der wenigstens einen die Hilfefunktionalität durch Betätigung ermöglichenden Taste der Eingabeeinrichtung und weiteren zur Erfassung von Informationen durch Betätigung nutzbaren Tasten der Eingabeeinrichtung die Anzeigeeinrichtung zur optischen Wiedergabe von Informationen befindet. In einer konkreten Ausgestaltung der Erfindung befindet sich die wenigstens eine eine erfindungsgemäße Hilfefunktionalität durch Betätigung ermöglichende Taste der Eingabeeinrichtung in einem Bereich oberhalb der Anzeigeeinrichtung zur optischen Wiedergabe von Informationen und die weiteren zur Erfassung von Informationen durch Betätigung nutzbaren Tasten der Eingabeeinrichtung in einem Bereich unterhalb der Anzeigeeinrichtung zur optischen Wiedergabe von Informationen.

In einer weiteren vorteilhaften Ausgestaltung der Erfindung erfolgt die Betätigung der Eingabeeinrichtung zur Auslösung und/oder Bewirkung einer erfindungsgemäßen Hilfefunktionalität akustisch, vorzugsweise durch Spracheingabe. Durch eine entsprechende Funktionalisierung des erfindungsgemäßen Endgerätes kann so die Nutzung einer erfindungsgemäßen Hilfefunktionalität weiter vereinfacht werden.

In einer weiteren Ausgestaltung der Erfindung weist das erfindungsgemäße Endgerät wenigstens eine Speichereinrichtung auf, in der die erläuternden Informationen einer erfindungsgemäßen Hilfefunktionalität als Text, Grafik und/oder akustische Informationen speicherbar sind und/oder gespeichert sind.

In einer weiteren besonderes vorteilhaften Ausgestaltung der Erfindung weisen die erläuternden Informationen zumindest teilweise wenigstens eine auswählbare Verknüpfung zu Nutzungs- und/oder Bedienmöglichkeiten der endgeräteseitig zur Verfügung stehenden Funktionen und/oder Anwendungen erläuternden Informationen seitens einer Datenbank des Telekommunikationsnetzes auf, wobei die in der Datenbank erfassten und/oder bereitgehaltenen erläuternden Informationen bei Auswahl der Verknüpfung mittels eines Dienstes des Telekommunikationsnetzes, vorzugsweise mittels SMS oder MMS, an das Endgerät übertragbar und seitens der Anzeigeeinrichtung des Endgerätes wiedergebbar sind. Erfindungsgemäß ist das Endgerät so vorteilhafterweise ausgebildet, umfangreichere Hilfefunktionalitäten bereitstellen zu können, beispielsweise mittels sogenannter "Hyperlinks".

In einer bevorzugten Ausgestaltung der Erfindung ist das erfindungsgemäße Endgerät ein in Mobilfunknetzen betreibbares mobiles Endgerät, vorzugsweise ein Mobilfunktelefon.

Vorteilhafterweise ist das erfindungsgemäße Endgerät zur Ausführung des erfindungsgemäßen Verfahrens ausgebildet.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer Draufsicht ein Ausführungsbeispiel eines erfindungsgemäßen Endgerätes zur Ausführung eines erfindungsgemäßen Verfahrens und
- Fig. 2: in einer prinzipiellen Darstellung der Wiedergaben seitens einer Anzeigeeinrichtung eines erfindungsgemäßen Endgerätes die prinzipielle Funktionsweise des erfindungsgemäßen Verfahrens.

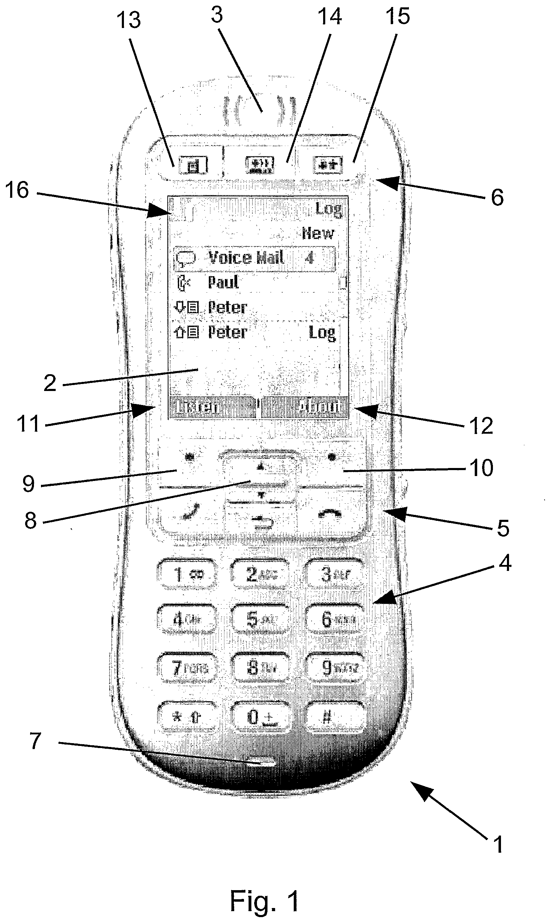

Fig. 1 zeigt ein in einem Mobilfunknetz betreibbares Mobilfunktelefon 1. Das Mobilfunktelefon 1 weist ein Display 2 als Anzeigeeinrichtung zur optischen Wiedergabe von Informationen und einen Lautsprecher 3 als Anzeigeeinrichtung zur akustischen Wiedergabe von Informationen auf. Weiter weist das Mobilfunktelefon 1 Tastaturen 4, 5 und 6 sowie ein Mikrofon 7 als Eingabeeinrichtungen zur Erfassung von Informationen auf, zu denen insbesondere auch Bedieneingaben gehören.

Die als Tastaturen ausgebildeten Eingabeeinrichtungen 4, 5 und 6 des Mobilfunktelefons 1 weisen jeweils mehrere betätigbare Tasten auf.

Die zwölf Tasten der Eingabeeinrichtung 4 dienen zur Erfassung von Informationen durch Eingabe von einzelnen Zeichen, beispielsweise Ziffern und/oder Buchstaben, durch entsprechende Tastenbetätigung.

Die sechs Tasten der Eingabeeinrichtung 5 dienen zur Steuerung von und/oder durch Funktionalitäten des Mobilfunktelefons 1, beispielsweise zur Gesprächsannahme, Gesprächsbeendigung, Menüauswahl oder dergleichen Funktionalitäten beziehungsweise Funktionen des Mobilfunktelefons 1. Die mittlere Taste 8 der als Eingabeeinrichtung dienenden Tastatur 5 ist dabei vorliegend als zwischen zwei Positionen kippbare Taste ausgebildet und erlaubt in entsprechenden Anwendungen und/oder Funktionen des Mobilfunktelefons 1 ein sogenanntes Blättern beziehungsweise Scrollen, insbesondere für eine weitergehende Menü- und/oder Funktionsauswahl in beziehungsweise durch seitens des Mobilfunktelefons 1 implementierten Anwendungen. Die Tasten 9 und 10 der Eingabeeinrichtung 5 ermöglichen bei entsprechender Betätigung eine weitergehende Menü- und/oder Funktionsauswahl, welche in entsprechenden Anwendungen und/oder bei Vorhandensein entsprechender Funktionalitäten beziehungsweise Funktionen seitens des Displays 2 in den mit dem Bezugszeichen 11 und 12 versehenen Pfeilen gekennzeichneten Bereichen dem Nutzer zur entsprechenden Auswahl signalisiert werden.

Die drei nebeneinander angeordneten Tasten 13, 14 und 15 der als Eingabeeinrichtung dienenden Tastatur 6 sind vorliegend für weitergehende Nutzungen von seitens der Anzeigeeinrichtung 2 und/oder 3 wiedergegebenen Informationen, insbesondere Kommunikationsinformationen, Terminfunktionalitäten repräsentierenden Informationen und/oder zu endgeräteseitig zur Verfügung stehenden Funktionen und/oder Anwendungen deren Nutzungs- und/oder Bedienmöglichkeiten erläuternden Informationen im Sinne einer erfindungsgemäßen Hilfefunktionalität, ausgebildet. Eine entsprechende weitergehende Nutzung wird dabei durch Betätigung einer der entsprechenden Tasten 13, 14 oder 15 der Eingabeeinrichtung 6 ermöglicht, vorliegend durch unmittelbare Auslösung beziehungsweise Bewirkung der entsprechenden weitergehenden Nutzung in Abhängigkeit von der jeweils betätigten Taste 13, 14 oder 15 der Eingabeeinrichtung 6.

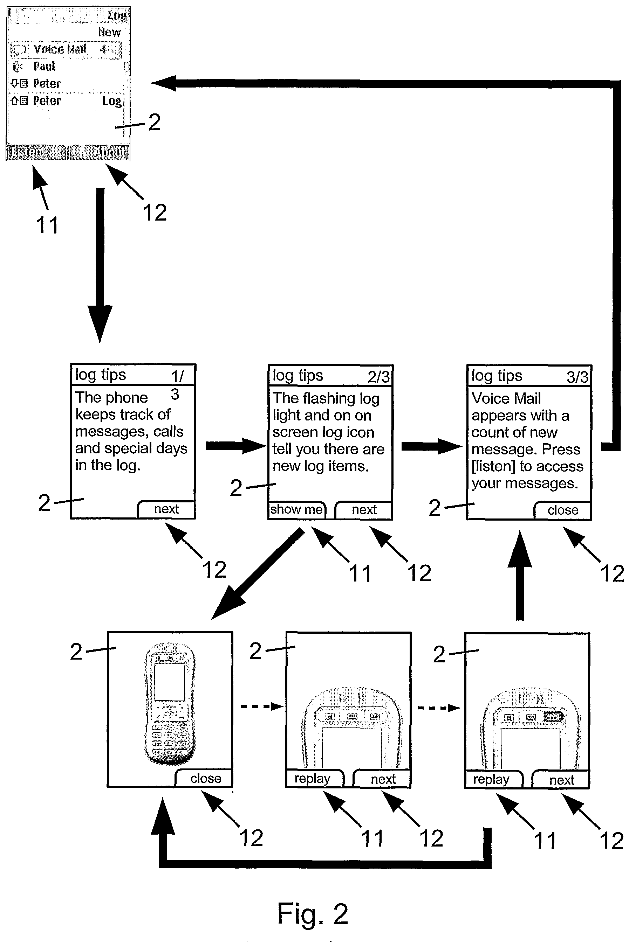

Die Tasten 13, 14 und 15 der Eingabeeinrichtung 6 sind vorliegend in einem Bereich oberhalb des Displays 2 und unterhalb des Lautsprechers 3 angeordnet. Die als Eingabeeinrichtungen dienenden Tastaturen 4 und 5 sind vorliegend in einem Bereich unterhalb des Displays 2 angeordnet, wobei die Tasten der Tastatur 5 vorliegend unmittelbar unterhalb des Displays 2, also an diese angrenzend, angeordnet sind. Die drei Tasten 13, 14 und 15 der Eingabeeinrichtung 6 sind vorliegend in der Lage, ihre Farbe zu ändern, wozu die Tasten 13, 14 und 15 der Eingabeeinrichtung 6, vorliegend eine mehrfarbige Hintergrundbeleuchtung aufweisen und entsprechend transparent ausgebildet sind. Die Tasten 13, 14 und 15 der Eingabeeinrichtung 6 des Mobilfunktelefons 1 können so insbesondere zur optischen Wiedergabe von seitens des Mobilfunktelefons 1 nutzbaren Informationen repräsentierenden Signalen genutzt werden, welche beispielsweise durch ein entsprechendes Leuchten, vorzugsweise mit einem Blinklicht, dem Nutzer des Mobilfunktelefons 1 signalisiert werden, vorliegend insbesondere zur Auslösung und/oder Bewirkung einer Hilfefunktionalität durch Wiedergabe von zu endgeräteseitig zur Verfügung stehenden Funktionen und/oder Anwendungen deren Nutzungs- und/oder Bedienmöglichkeiten erläuternden Informationen seitens der Anzeigeeinrichtungen 2 und/oder 3. Darüber hinaus können entsprechende Informationen repräsentierende Signale in optischer Form seitens des Displays 2 wiedergegeben werden, beispielsweise durch ein entsprechendes Logo, Text oder dergleichen optischer Informationen, wie vorliegend im Zusammenhang mit der mit dem Bezugszeichen 15 gekennzeichneten Taste der Eingabeeinrichtung 6 und dem entsprechenden seitens des Displays 2 des Mobilfunktelefons 1 wiedergegebenen und in den Fig. 1 und 2 mit dem Bezugszeichen 16 gekennzeichneten Logos exemplarisch dargestellt. Für den Nutzer des Mobilfunktelefons 1 ist so eine gesteigerte Synergie in der Bedienbeziehungsweise Handhabbarkeit des Mobilfunktelefons 1 erzielbar, die eine Vereinfachung sowohl in der Wahrnehmung von Informationen als auch in der weitergehenden Nutzung derselben ermöglicht, insbesondere für ungeübte und/oder ältere Nutzer des Mobilfunktelefons 1.

Fig. 2 zeigt optische Wiedergaben seitens des Displays 2 des Mobilfunktelefons 1 in Abhängigkeit von erfolgenden Betätigungen der Eingabeeinrichtungen 4, 5 und/oder 6 des Mobilfunktelefons 1 wie sie im Rahmen einer Wiedergabe von Nutzungs- und/oder Bedienmöglichkeiten erläuternden Informationen zu endgeräteseitig zur Verfügung stehenden Funktionen und/oder Anwendungen ermöglicht wird. Bei dem in Fig. 2 dargestellten Ausführungsbeispiel wird ausgehend von der bereits in Fig. 1 seitens des Displays 2 erfolgenden optischen Wiedergabe von dem Nutzer des Mobilfunktelefon 1 zur Wiedergabe erläuternder Informationen zu der vorliegend ausgewählten beziehungsweise angezeigten Funktion und/oder Anwendung "Voice Mail" in dem mit 11 gekennzeichneten Bereich signalisiert, dass durch Betätigung der Taste 9 der Eingabeeinrichtung 5 entsprechende Voice Mails abgehört werden können. In dem Bereich 11 des Displays 2 wird dementsprechend symbolisch die Taste 9 repräsentiert und mit der entsprechenden durch Betätigung auslösbaren beziehungsweise bewirkbaren Funktion "Listen" angezeigt. In dem mit 12 gekennzeichneten Bereich wird dementsprechend die bei Betätigung der Taste 10 zur Verfügung stehende Funktion beziehungsweise Anwendung angezeigt, die bei Betätigung der Taste 10 ausgelöst beziehungsweise bewirkt wird. Vorliegend wird dabei in dem mit 12 gekennzeichneten Bereich durch die symbolisch dargestellte Taste 10 und deren Beschriftung "About" dem Nutzer signalisiert, dass bei Betätigung der Taste 10 vorliegend erläuternde Informationen zu der endgeräteseitig zur Verfügung stehenden Funktion beziehungsweise Anwendung "Voice Mail" zur Verfügung stehen und bei Betätigung entsprechend seitens des Displays 2 wiedergegeben werden können. Vorteilhafterweise erfolgt dabei die Wiedergabe der zur Verfügung stehenden Hilfefunktionalität "About" in Abhängigkeit des nutzerindividuellen Nutzungskontextes. Vorliegend erkennt das Mobilfunktelefon 1 dabei prognostizierend, dass der Nutzer Bedarf an der Wahrnehmung einer entsprechenden Hilfefunktionalität hat und bietet diese durch entsprechende Tastenbetätigung 10 zur Auswahl an.

Nach erfolgter Betätigung der Taste 10 wird seitens des Displays 2 vorliegend ein entsprechender Hilfetext wiedergegeben. Vorliegend besteht dieser Hilfetext aus drei seitens des Displays wiederzugebenden beziehungsweise wiedergebbaren Textinformationen, wie anhand der im Bereich 16 des Displays 2 rechts oben wiedergegebenen aufzählenden Anzahl von zur Verfügung stehenden Seiten (1/3, 2/3, 3/3) zu erkennen. Neben den Textinformationen werden seitens des Displays 2 in den Bereichen 11 und 12 entsprechend zur Verfügung stehende Eingabemöglichkeiten für die Tasten 9 beziehungsweise 10 wiedergegeben. Die erläuternde Erläuterung der Informationen wiedergebende erste der drei Seiten (1/3) zeigt dem Nutzer entsprechend an, dass die Seite zwei von drei (2/3) durch Betätigung der Taste 10 wiedergebbar ist. Seitens der Seite zwei von drei (2/3) wird dem Nutzer entsprechend in dem mit 12 gekennzeichneten Bereich angezeigt, dass er durch nochmalige Betätigung der Taste 10 des Mobilfunktelefons 1 zu der Seite drei von drei (3/3) der entsprechenden Hilfefunktionalität gelangen kann. In dem mit 11 gekennzeichneten Bereich des Displays 2 wird dem Nutzer bei Wiedergabe der Seite zwei von drei (2/3) der dargestellten Erfindungsfunktionalität angezeigt, dass er sich durch Betätigung der Taste 9 den auf der Seite zwei von drei (2/3) wiedergegebenen Hilfetext auch in animierter Form als Grafik beziehungsweise Video anzeigen lassen kann. Dies wird in Fig. 2 in dem mit 11 gekennzeichneten Bereich der Seite zwei von drei der zur Verfügung gestellten Hilfefunktionalität durch den entsprechenden Text "show me" dem Nutzer entsprechend signalisiert.

Bei entsprechender Betätigung der Taste 9 entsprechend der "show me" Funktionalität des in Fig. 2 mit 11 gekennzeichneten Bereichs der Seite zwei von drei (2/3) wird dementsprechend die Hilfefunktionalität in graphisch animierter Form als Video und/oder Bilderfolge wiedergegeben. Ausgehend von der Wiedergabe der Hilfefunktionalität entsprechend der Seite zwei von drei (2/3) wird bei Betätigung der Taste 10 entsprechend der in dem Bereich 12 des Displays 2 wiedergegebenen Funktionalität die Seite drei von drei (3/3) mit entsprechendem Hilfetext wiedergegeben. Vorliegend wird dabei erläutert, dass eine Betätigung der Taste 10 entsprechend dem Bereich 11 in dem ursprünglichen Funktionsmenü die Funktion "Listen" ausgelöst wird. Ausgehend von dem Hilfetext der Seite drei von drei (3/3) wird bei nochmaliger Betätigung der Taste 10 entsprechend der in dem Bereich 12 des Displays 2 wiedergegebenen Funktionsinformation die Hilfefunktionalität geschlossen, dargestellt durch den Text "close" in dem Bereich 12. Der Nutzer des Mobilfunktelefons 1 gelangt dementsprechend zurück zu dem ursprünglichen Funktionsbildschirm.

Im Rahmen der graphisch animierten Wiedergabe in Form von Video und/oder Bewegtgrafiken beziehungsweise Bilderfolgen, in Fig. 2 in der unteren Reihe dargestellt, wird vorliegend zunächst das dem Nutzer zur Verfügung stehende Mobilfunktelefon 1 wiedergegeben. Anschließend erfolgt eine vergrößerte Darstellung entsprechend der in dem Hilfetext auf der Seite zwei von drei (2/3) der in Fig. 2 in der mittleren Reihe von Wiedergaben des Displays 2 dargestellten Hilfetextes. Dabei wird graphisch animiert gezeigt, wo sich die für eine weitergehende Nutzung und/oder Bedienung zu aktivierenden Tasten des Mobilfunktelefons 1 befinden. Vorliegend wird dabei entsprechend dem Hilfetext der Seite zwei von drei (2/3) in dem Display 2 dargestellt, dass die Taste 15 blinkt, was in Fig. 2 anhand der unterschiedlichen Farbe der Taste 15 dargestellt ist. Weiter werden im Rahmen der graphisch animierten Wiedergabe der Hilfefunktionalität dem Nutzer in den Bereichen 11 beziehungsweise 12 weiter zur Verfügung gestellte Bedien- beziehungsweise Betätigungseingaben über die Tasten 9 beziehungsweise 10 angezeigt. Dabei ermöglicht die Taste 10 zunächst ein Schließen der graphisch animierten Wiedergabe der Hilfefunktionalität, in dem Display 2 dargestellt durch den Text "close" in dem Bereich 12. Im Anschluss beziehungsweise während der graphisch animierten Wiedergabe der Hilfefunktionalität ermöglich die Taste 10 entsprechend der in dem Bereich 12 wiedergegebenen Funktionalität ein Zurückspringen beziehungsweise Fortsetzen der Funktionalität entsprechend der in der mittleren Reihe der Displaydarstellungen erfolgten textorientierten graphischen Wiedergabe der Hilfefunktionalität, vorliegend durch eine Wiedergabe der Hilfefunktionalität der Seite drei von drei (3/3) seitens des Displays 2. Eine Betätigung der Taste 9 entsprechend der in dem Bereich 11 wiedergegebenen Funktionalität "replay" ermöglicht dementsprechend ein nochmaliges beziehungsweise eine erneutes Starten der graphisch animierten Wiedergabe der Hilfefunktionalität, wie sie in der unteren Reihe von Displaydarstellungen in Fig. 2 dargestellt ist.

Die in den Fig. der Zeichnung dargestellten Ausführungsbeispiele dienen lediglich der Erläuterung der Erfindung und sind für diese nicht beschränkend.

### Bezugszeichenliste

- 1: Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Tastatur
- 6: Eingabeeinrichtung/Tastatur
- 7: Eingabeeinrichtung(Mikrofon
- 8: Taste (Eingabeeinrichtung (5))
- 9: Taste (Eingabeeinrichtung (5))
- 10: Taste (Eingabeeinrichtung (5))
- 11: Bereich (Anzeigeeinrichtung (2))
- 12: Bereich (Anzeigeeinrichtung (2))
- 13: Taste (Eingabeeinrichtung (6))
- 14: Taste (Eingabeeinrichtung (6))
- 15: Taste (Eingabeeinrichtung (6))
- 16: Bereich (Anzeigeeinrichtung (2))

## Patentansprüche

1. Verfahren zum Betreiben eines in einem Telekommunikationsnetz, vorzugsweise einem Mobilfunknetz, nutzbaren Endgerätes (1), welches eine Anzeigeeinrichtung (2, 3) zur optischen und/oder akustischen Wiedergabe von Informationen und wenigstens eine Eingabeeinrichtung (4, 5, 6) zur Erfassung von Informationen aufweist, wobei zu endgeräteseitig zur Verfügung stehenden Funktionen und/oder Anwendungen deren Nutzungs- und/oder Bedienmöglichkeiten erläuternde Informationen bei Bedarf seitens der Anzeigeeinrichtung (2, 3) wiedergegeben werden,
wobei der Bedarf in Abhängigkeit von und/oder aus dem jeweiligen nutzerindividuellen Nutzungskontext bestimmt wird, wobei die Bedarfsbestimmung hinsichtlich der jeweiligen Bedürfnisse eines Nutzers nach Hilfe bezüglich zur Verfügung stehender Informationen und/oder Anwendungen erfolgt,
**dadurch gekennzeichnet, dass**
der Bedarf prognostizierend bestimmt wird, wobei im Rahmen der prognostizierenden Bedarfsbestimmung ein aktives Betätigen als auch ein zu langes Nichtbetätigen in bestimmten endgeräteseitig zur Verfügung stehenden Funktionen und/oder Anwendungen seitens der Eingabeeinrichtung (4, 5, 6) berücksichtigt wird.

2. Verfahren nach Anspruch 1, **dadurch gekennzeichnet, dass** der Nutzungskontext durch Erfassung endgeräteseitig erfolgender Funktions- und/oder Anwendungsnutzungen bestimmt wird.

3. Verfahren nach Anspruch 2, **dadurch gekennzeichnet, dass** endgeräteseitig erfolgende Funktions- und/oder Anwendungsnutzungen nach Zeit, Ort, Nutzungsreihenfolge und/oder Nutzungshäufigkeit erfasst werden.

4. Verfahren nach einem der Ansprüche 1 bis 3, **dadurch gekennzeichnet, dass** im Rahmen einer prognostizierenden Bedarfsbestimmung wenigstens ein Vergleich von zur Verfügung stehenden Nutzungs- und/oder Bedienmöglichkeiten von Funktionen und/oder Anwendungen mit erfassten Funktions- und/oder Anwendungsnutzungen erfolgt.

5. Verfahren nach einem der Ansprüche 1 bis 4, **dadurch gekennzeichnet, dass** eine Wiedergabe der erläuternden Informationen durch Betätigung der Eingabeeinrichtung (4, 5, 6, 7) bewirkt und/oder ausgelöst wird.

6. Verfahren nach einem der Ansprüche 1 bis 5, **dadurch gekennzeichnet, dass** eine automatische Wiedergabe der erläuternden Informationen mit und/oder nach erfolgter Bedarfsbestimmung bewirkt und/oder ausgelöst wird.

7. Verfahren nach einem der Ansprüche 1 bis 6, **dadurch gekennzeichnet, dass** die Wiedergabe der erläuternden Informationen ohne ein zusätzliches Menü und/oder eine zusätzliche Menüführung ausgelöst und/oder bewirkt wird.

8. Verfahren nach einem der Ansprüche 1 bis 7, **dadurch gekennzeichnet, dass** die Wiedergabe der erläuternden Informationen optisch und/oder akustisch erfolgt, wobei die optische Wiedergabe vorzugsweise in graphisch animierter Form und/oder in einer gegenüber sonstigen graphischen Wiedergaben vergrößerten Form und/oder anderen Farbe bzw. Farbkombination erfolgt.

9. Verfahren nach einem der Ansprüche 1 bis 8, **dadurch gekennzeichnet, dass** die Eingabeeinrichtung (6) des Endgerätes (1) wenigstens eine Taste (13, 14, 15) aufweist, die bei Betätigung eine Wiedergabe der erläuternden Informationen bewirkt und/oder auslöst.

10. Verfahren nach einem der Ansprüche 5 bis 9, **dadurch gekennzeichnet, dass** die Betätigung der Eingabeeinrichtung (7) des Endgerätes (1) akustisch erfolgt, vorzugsweise durch Spracheingabe.

11. Verfahren nach einem der Ansprüche 1 bis 10, **dadurch gekennzeichnet, dass** die erläuternden Informationen seitens des Endgerätes (1) gespeichert sind und/oder werden.

12. Verfahren nach einem der Ansprüche 1 bis 11, **dadurch gekennzeichnet, dass** die erläuternden Informationen zumindest teilweise wenigstens eine auswählbare Verknüpfung zu Nutzungs- und/oder Bedienmöglichkeiten der endgeräteseitig zur Verfügung stehenden Funktionen und/oder Anwendungen erläuternden Informationen seitens einer Datenbank des Telekommunikationsnetzes aufweisen, wobei die in der Datenbank erfassten und/oder bereitgehaltenen erläuternden Informationen bei Auswahl der Verknüpfung mittels eines Dienstes des Telekommunikationsnetzes an das Endgerät (1) übertragen und seitens der Anzeigeeinrichtung (2, 3) wiedergegeben werden.

13. Verfahren nach einem der Ansprüche 1 bis 12, **dadurch gekennzeichnet, dass** dieses als Anwendungsprogramm auf das Endgerät (1) übertragbar und seitens des Endgerätes (1) ausführbar ist.

14. Endgerät (1) zur Nutzung in einem Telekommunikationsnetz, vorzugsweise einem Mobilfunknetz, mit einer Anzeigeeinrichtung (2, 3) zur optischen und/oder akustischen Wiedergabe von Informationen und wenigstens einer Eingabeeinrichtung (4, 5, 6, 7) zur Erfassung von Informationen, wobei seitens der Anzeigeeinrichtung (2, 3) zu endgeräteseitig zur Verfügung stehenden Funktionen und/oder Anwendungen deren Nutzungs- und/oder Bedienmöglichkeiten erläuternde Informationen bei Bedarf seitens der Anzeigeeinrichtung (2, 3) wiedergebbar sind,
wobei das Endgerät (1) dazu ausgebildet ist, den Bedarf in Abhängigkeit von und/oder aus dem jeweiligen nutzerindividuellen Nutzungskontext, hinsichtlich der jeweiligen Bedürfnisse eines Nutzers nach Hilfe bezüglich zur Verfügung stehender Informationen und/oder Anwendungen, zu bestimmen,
**dadurch gekennzeichnet, dass**
das Endgerät (1) dazu ausgebildet ist, den Bedarf prognostizierend zu bestimmen, wobei im Rahmen der prognostizierenden Bedarfsbestimmung ein aktives Betätigen als auch ein zu langes Nichtbetätigen in bestimmten endgeräteseitig zur Verfügung stehenden Funktionen und/oder Anwendungen seitens der Eingabeeinrichtung (4, 5, 6, 7) berücksichtigt wird.

15. Endgerät (1) nach Anspruch 14, **dadurch gekennzeichnet, dass** der Nutzungskontext durch Erfassung endgeräteseitig erfolgender Funktions- und/oder Anwendungsnutzungen bestimmbar ist.

16. Endgerät (1) nach Anspruch 14 oder 15, **dadurch gekennzeichnet, dass** endgeräteseitig erfolgende Funktions- und/oder Anwendungsnutzungen nach Zeit, Ort, Nutzungsreihenfolge und/oder Nutzungshäufigkeit erfassbar sind.

17. Endgerät (1) nach einem der Ansprüche 14 bis 16, **dadurch gekennzeichnet, dass** im Rahmen einer prognostizierenden Bedarfsbestimmung wenigstens ein Vergleich von zur Verfügung stehenden Nutzungs- und/oder Bedienmöglichkeiten von Funktionen und/oder Anwendungen mit erfassten Funktions- und/oder Anwendungsnutzungen erfolgt.

18. Endgerät (1) nach einem der Ansprüche 14 bis 17, **dadurch gekennzeichnet, dass** eine Wiedergabe der erläuternden Informationen durch Betätigung der Eingabeeinrichtung (4, 5, 6, 7) bewirkbar und/oder auslösbar ist.

19. Endgerät (1) nach einem der Ansprüche 14 bis 18, **dadurch gekennzeichnet, dass** eine automatische Wiedergabe der erläuternden Informationen mit und/oder nach erfolgter Bedarfsbestimmung bewirkbar und/oder auslösbar ist.

20. Endgerät (1) nach einem der Ansprüche 14 bis 19, **dadurch gekennzeichnet, dass** die Wiedergabe der erläuternden Informationen ohne ein zusätzliches Menü und/oder eine zusätzliche Menüführung auslösbar und/oder bewirkbar ist.

21. Endgerät (1) nach einem der Ansprüche 14 bis 20, **dadurch gekennzeichnet, dass** die Wiedergabe der erläuternden Informationen optisch und/oder akustisch erfolgt, wobei die optische Wiedergabe vorzugsweise in graphisch animierter Form und/oder in einer gegenüber sonstigen graphischen Wiedergaben vergrößerten Form und/oder anderen Farbe bzw. Farbkombination erfolgt.

22. Endgerät (1) nach einem der Ansprüche 14 bis 21, **dadurch gekennzeichnet, dass** die Eingabeeinrichtung (6) wenigstens eine Taste (13, 14, 15) aufweist, die bei Betätigung eine Wiedergabe der erläuternden Informationen bewirkt und/oder auslöst.

23. Endgerät (1) nach Anspruch 22, **dadurch gekennzeichnet, dass** die Farbe der wenigstens einen Taste (13, 14, 15) veränderbar ist.

24. Endgerät nach Anspruch 22 oder Anspruch 23, **dadurch gekennzeichnet, dass** die wenigstens eine Taste der Eingabeeinrichtung von einer zumindest teilweise berührungssensitiven Anzeigeeinrichtung ausgebildet ist, welche vorzugsweise zumindest teilweise Bestandteil der Anzeigeeinrichtung (2) zur optischen Wiedergabe von Informationen ist.

25. Endgerät (1) nach einem der Ansprüche 18 bis 24, **dadurch gekennzeichnet, dass** die Betätigung der Eingabeeinrichtung (7) akustisch erfolgt, vorzugsweise durch Spracheingabe.

26. Endgerät (1) nach einem der Ansprüche 14 bis 25, **dadurch gekennzeichnet, dass** dieses eine Speichereinrichtung aufweist, in der die erläuternden Informationen speicherbar und/oder gespeichert sind.

27. Endgerät (1) nach einem der Ansprüche 14 bis 26, **dadurch gekennzeichnet, dass** die erläuternden Informationen zumindest teilweise wenigstens eine auswählbare Verknüpfung zu Nutzungs- und/oder Bedienmöglichkeiten der endgeräteseitig zur Verfügung stehenden Funktionen und/oder Anwendungen erläuternden Informationen seitens einer Datenbank des Telekommunikationsnetzes aufweisen, wobei die in der Datenbank erfassten und/oder bereitgehaltenen erläuternden Informationen bei Auswahl der Verknüpfung mittels eines Dienstes des Telekommunikationsnetzes an das Endgerät (1) übertragbar und seitens der Anzeigeeinrichtung (2, 3) wiedergebbar sind.

28. Endgerät (1) nach einem der Ansprüche 14 bis 27, **dadurch gekennzeichnet, dass** dieses ein in Mobilfunknetzen betreibbares mobiles Endgerät (1), vorzugsweise ein Mobilfunktelefon (1), ist.

29. Endgerät (1) nach einem der Ansprüche 14 bis 28, **dadurch gekennzeichnet, dass** dieses zur Ausführung eines Verfahrens nach einem der Ansprüche 1 bis 13 ausgebildet ist.

## Claims

1. A method for operating a terminal (1) which can be used in a telecommunication network, preferably a mobile radio network, and which comprises a display device (2, 3) for the optical and/or acoustic reproduction of information and at least one input device (4, 5, 6) for collecting information, wherein information explaining the using and/or operating options of functions and/or applications provided by the terminal will be displayed by the display device (2, 3) in case of need,
wherein the need will be determined in dependence on and/or from the respective user individual context of use with respect to the respective requirements of a user after assistance with respect to information and/or applications that are available,
**characterized in that**
the need will be determined in a forecasting manner, wherein within the scope of the forecasting determination of need an active operation and also an excessively long non-activation of certain functions and/or applications that are provided by the terminal by means of the input device (4, 5, 6) will be considered.

2. A method according to claim 1, **characterized in that** the context of use will be determined by collecting utilisations of functions and/or applications carried out by means of the terminal.

3. A method according to claim 2, **characterized in that** utilisations of functions and/or applications carried out by means of the terminal will be collected according to time, place, order of use and/or frequency of use.

4. A method according to one of the claims 1 to 3, **characterized in that** within the scope of a forecasting determination of need at least one comparison between available using and/or operating options of functions and/or applications and recorded utilisations of functions and/or applications will take place.

5. A method according to one of the claims 1 to 4, **characterized in that** a reproduction of the explaining information will be caused and/or activated by operating the input device (4, 5, 6, 7).

6. A method according to one of the claims 1 to 5, **characterized in that** an automatic reproduction of the explaining information will be caused and/or activated with and/or after a determination of need that has taken place.

7. A method according to one of the claims 1 to 6, **characterized in that** the reproduction of the explaining information will be caused and/or activated without any additional menu and/or any additional menu navigation.

8. A method according to one of the claims 1 to 7, **characterized in that** the reproduction of the explaining information will take place optically and/or acoustically, wherein the optical reproduction will preferably take place in a graphically animated form and/or in a magnified form and/or in another colour or colour combination with respect to other graphical reproductions.

9. A method according to one of the claims 1 to 8, **characterized in that** the input device (6) of the terminal (1) comprises at least one key (13, 14, 15) which causes and/or activates a reproduction of the explaining information, if it is pressed.

10. A method according to one of the claims 5 to 9, **characterized in that** the input device (7) of the terminal (1) is acoustically operated, preferably by voice input.

11. A method according to one of the claims 1 to 10, **characterized in that** the explaining information is and/or will be stored by the terminal (1).

12. A method according to one of the claims 1 to 11, **characterized in that** the explaining information comprises at least partially at least one selectable link to information that explains using and/or operating options of the functions and/or applications provided by the terminal and that is provided by a data base of the telecommunication network, wherein if the link is selected, the explaining information collected and/or provided by the data base will be transmitted to the terminal (1) by means of a service of the telecommunication network and will be reproduced by the display device (2, 3).

13. A method according to one of the claims 1 to 12, **characterized in that** this one can be transmitted as application program to the terminal (1) and be carried out by the terminal (1).

14. A terminal (1) for the use in a telecommunication network, preferably a mobile radio network, comprising a display device (2, 3) for the optical and/or acoustic reproduction of information and at least one input device (4, 5, 6, 7) for collecting information, wherein information explaining the using and/or operating options of functions and/or applications provided by the terminal can be displayed by the display device (2, 3) in case of need,
wherein the terminal (1) is configured for determining the need in dependence on and/or from the respective user individual context of use with respect to the respective requirements of a user after assistance with respect to information and/or applications that are available,
**characterized in that**
the terminal (1) is configured for determining the need in a forecasting manner, wherein within the scope of the forecasting determination of need an active operation and also an excessively long non-activation of certain functions and/or applications that are provided by the terminal by means of the input device (4, 5, 6, 7) will be considered.

15. A terminal (1) according to claim 14, **characterized in that** the context of use can be determined by collecting utilisations of functions and/or applications carried out by means of the terminal.

16. A terminal (1) according to claim 14 or 15, **characterized in that** utilisations of functions and/or applications carried out by means of the terminal can be collected according to time, place, order of use and/or frequency of use.

17. A terminal (1) according to one of the claims 14 to 16, **characterized in that** within the scope of a forecasting determination of need at least one comparison between available using and/or operating options of functions and/or applications and recorded utilisations of functions and/or applications will take place.

18. A terminal (1) according to one of the claims 14 to 17, **characterized in that** a reproduction of the explaining information will be caused and/or activated by operating the input device (4, 5, 6, 7).

19. A terminal (1) according to one of the claims 14 to 18, **characterized in that** an automatic reproduction of the explaining information can be caused and/or activated with and/or after a determination of need that has taken place.

20. A terminal (1) according to one of the claims 14 to 19, **characterized in that** the reproduction of the explaining information can be caused and/or activated without any additional menu and/or any additional menu navigation.

21. A terminal (1) according to one of the claims 14 to 20, **characterized in that** the reproduction of the explaining information will take place optically and/or acoustically, wherein the optical reproduction will preferably take place in a graphically animated form and/or in a magnified form and/or in another colour or colour combination with respect to other graphical reproductions.

22. A terminal (1) according to one of the claims 14 to 21, **characterized in that** input device (6) comprises at least one key (13, 14, 15) which causes and/or activates a reproduction of the explaining information, if it is pressed.

23. A terminal (1) according to claim 22, **characterized in that** the colour of the at least one key (13, 14, 15) can be changed.

24. A terminal according to claim 22 or claim 23, **characterized in that** the at least one key of the input device is formed by an at least partially sensitive touch display device which is preferably at least partially a part of the display device (2) for the optical reproduction of information.

25. A terminal (1) according to one of the claims 18 to 24, **characterized in that** the input device (7) is acoustically operated, preferably by voice input.

26. A terminal (1) according to one of the claims 14 to 25, **characterized in that** this one comprises a storage device in which the explaining information can be stored and/or are stored.

27. A terminal (1) according to one of the claims 14 to 26, **characterized in that** the explaining information comprises at least partially at least one selectable link to information that explains using and/or operating options of the functions and/or applications provided by the terminal and that is provided by a data base of the telecommunication network, wherein if the link is selected, the explaining information collected and/or provided by the data base can be transmitted to the terminal (1) by means of a service of the telecommunication network and can be reproduced by the display device (2, 3).

28. A terminal (1) according to one of the claims 14 to 27, **characterized in that** this one is a mobile terminal (1) that can be operated in mobile radio networks, preferably a mobile phone (1).

29. A terminal (1) according to one of the claims 14 to 28, **characterized in that** this one is configured for carrying out a method according to one of the claims 1 to 13.

## Revendications

1. Procédé de fonctionnement d'un terminal (1) utilisable dans un réseau de télécommunication, de préférence un réseau radio mobile, lequel terminal (1) comprend un dispositif d'affichage (2, 3) pour la reproduction optique et/ou acoustique d'informations et au moins un dispositif d'entrée (4, 5, 6) pour collecter des informations, des informations expliquant des possibilités d'utilisation et/ou de commande des fonctions et/ou des applications rendues disponibles par le terminal étant reproduites en cas de besoin par le dispositif d'affichage (2, 3),
dans lequel le besoin est déterminé en fonction de et/ou à partir du contexte d'utilisation respectif et spécifique à l'utilisateur, la détermination de besoin se faisant par rapport aux besoins respectifs d'un utilisateur après l'assistance concernant les informations et/ou les applications disponibles,
**caractérisé en ce que**
le besoin est déterminé de manière prévoyant, dans lequel, dans le cadre de la détermination prévoyante, un actionnement actif et aussi un non-actionnement trop long de certaines fonctions et/ou de certaines applications rendues disponibles par le terminal par moyen du dispositif d'entrée (4, 5, 6) sont pris en compte.

2. Procédé selon la revendication 1, **caractérisé en ce que** le contexte d'utilisation est déterminé en collectant des utilisations de fonctions et/ou d'applications effectuées par le terminal.

3. Procédé selon la revendication 2, **caractérisé en ce que** des utilisations de fonctions et/ou d'applications effectuées par le terminal sont collectées selon le temps, selon le lieu, selon l'ordre d'utilisations et/ou selon la fréquence d'utilisations.

4. Procédé selon l'une des revendications 1 à 3, **caractérisé en ce que** dans le cadre d'une détermination prévoyante de besoin au moins une comparaison des possibilités d'utilisation et/ou de commande disponibles de fonctions et/ou d'applications avec des utilisations de fonctions et/ou d'applications collectées est réalisée.

5. Procédé selon l'une des revendications 1 à 4, **caractérisé en ce qu'**une reproduction des informations expliquant est provoquée et/ou déclenchée par l'actionnement du dispositif d'entrée (4, 5, 6,7).

6. Procédé selon l'une des revendications 1 à 5, **caractérisé en ce qu'**une reproduction automatique des informations expliquant est provoquée et/ou déclenchée avec et/ou après une détermination de besoin effectuée.

7. Procédé selon l'une des revendications 1 à 6, **caractérisé en ce que** la reproduction des informations expliquant est provoquée et/ou déclenchée sans un menu supplémentaire et/ou sans une navigation de menu supplémentaire.

8. Procédé selon l'une des revendications 1 à 7, **caractérisé en ce que** la reproduction des informations expliquant se fait de manière optique et/ou acoustique, la reproduction optique étant de préférence réalisée sous forme graphiquement animée et/ou sous une forme magnifiée et/ou dans une autre couleur ou combinaison de couleurs par rapport à des autres reproductions graphiques.

9. Procédé selon l'une des revendications 1 à 8, **caractérisé en ce que** le dispositif d'entrée (6) du terminal (1) comprend au moins une touche (13, 14, 15), qui provoque et/ou déclenche une reproduction des informations expliquant, si on appuie sur celle-ci.

10. Procédé selon l'une des revendications 5 à 9, **caractérisé en ce que** l'actionnement du dispositif d'entrée (7) du terminal (1) se fait acoustiquement, de préférence par commande vocale.

11. Procédé selon l'une des revendications 1 à 10, **caractérisé en ce que** les informations expliquant sont et/ou seront stockées par le terminal (1).

12. Procédé selon l'une des revendications 1 à 11, **caractérisé en ce que** les informations expliquant comprennent au moins partiellement au moins un lien sélectionnable à des informations expliquant des possibilités d'utilisation et/ou de commande des fonctions et/ou des applications rendues disponibles par le terminal, le lien étant fourni par une base de données du réseau de télécommunication, dans lequel si le lien est sélectionné, les informations expliquant collectées et/ou stockées dans la base de données seront transmises au terminal (1) par moyen d'un service du réseau de télécommunication et seront reproduites par le dispositif d'affichage (2, 3).

13. Procédé selon l'une des revendications 1 à 12, **caractérisé en ce que** celui-ci peut être transmis comme un programme d'application au terminal (1) et être effectué par le terminal (1).

14. Terminal (1) destiné à l'utilisation dans un réseau de télécommunication, de préférence dans un réseau radio mobile, comprenant un dispositif d'affichage (2, 3) pour la reproduction optique et/ou acoustique d'informations et au moins un dispositif d'entrée (4, 5, 6, 7) pour collecter des informations, des informations expliquant des possibilités d'utilisation et/ou de commande des fonctions et/ou des applications rendues disponibles par le terminal pouvant être reproduites en cas de besoin par le dispositif d'affichage (2, 3),
dans lequel le terminal est configuré pour déterminer le besoin en fonction de et/ou à partir du contexte d'utilisation respectif et spécifique à l'utilisateur, par rapport aux besoins respectifs d'un utilisateur après l'assistance concernant les informations et/ou les applications disponibles,
**caractérisé en ce que**
le terminal (1) est configuré pour déterminer le besoin de manière prévoyant, dans lequel, dans le cadre de la détermination prévoyante, un actionnement actif et aussi un non-actionnement trop long de certaines fonctions et/ou de certaines applications rendues disponibles par le terminal par moyen du dispositif d'entrée (4, 5, 6, 7) sont pris en compte.

15. Terminal (1) selon la revendication 14, **caractérisé en ce que** le contexte d'utilisation peut être déterminé en collectant des utilisations de fonctions et/ou d'applications effectuées par le terminal.

16. Terminal (1) selon la revendication 14 ou la revendication 15, **caractérisé en ce que** des utilisations de fonctions et/ou d'applications effectuées par le terminal peuvent être collectées selon le temps, selon le lieu, selon l'ordre d'utilisations et/ou selon la fréquence d'utilisations.

17. Terminal (1) selon l'une des revendications 14 à 16, **caractérisé en ce que** dans le cadre d'une détermination prévoyante de besoin au moins une comparaison des possibilités d'utilisation et/ou de commande disponibles de fonctions et/ou d'applications avec des utilisations de fonctions et/ou d'applications collectées est réalisée.

18. Terminal (1) selon l'une des revendications 14 à 17, **caractérisé en ce qu'**une reproduction des informations expliquant peut être provoquée et/ou déclenchée par l'actionnement du dispositif d'entrée (4, 5, 6,7).

19. Terminal (1) selon l'une des revendications 14 à 18, **caractérisé en ce qu'**une reproduction automatique des informations expliquant peut être provoquée et/ou déclenchée avec et/ou après une détermination de besoin effectuée.

20. Terminal (1) selon l'une des revendications 14 à 19, **caractérisé en ce que** la reproduction des informations expliquant peut être provoquée et/ou déclenchée sans un menu supplémentaire et/ou sans une navigation de menu supplémentaire.

21. Terminal (1) selon l'une des revendications 14 à 20, **caractérisé en ce que** la reproduction des informations expliquant se fait de manière optique et/ou acoustique, la reproduction optique étant de préférence réalisée sous forme graphiquement animée et/ou sous une forme magnifiée et/ou dans une autre couleur ou combinaison de couleurs par rapport à des autres reproductions graphiques.

22. Terminal (1) selon l'une des revendications 14 à 21, **caractérisé en ce que** le dispositif d'entrée (6) comprend au moins une touche (13, 14, 15), qui provoque et/ou déclenche une reproduction des informations expliquant, si on appuie sur celle-ci.

23. Terminal (1) selon la revendication 22, **caractérisé en ce que** la couleur de l'au moins une touche (13, 14, 15) est variable.

24. Terminal selon la revendication 22 ou la revendication 23, **caractérisé en ce que** l'au moins une touche du dispositif d'entrée est formée par un dispositif d'affichage au moins partiellement tactile, qui fait de préférence au moins partiellement partie du dispositif d'affichage (2) pour la reproduction optique d'informations.

25. Terminal (1) selon l'une des revendications 18 à 24, **caractérisé en ce que** l'actionnement du dispositif d'entrée (7) se fait acoustiquement, de préférence par commande vocale.

26. Terminal (1) selon l'une des revendications 14 à 25, **caractérisé en ce que** celui-ci comprend un dispositif de stockage, dans lequel peuvent être stockées et/ou sont stockées les informations expliquant.

27. Terminal (1) selon l'une des revendications 14 à 26, **caractérisé en ce que** les informations expliquant comprennent au moins partiellement au moins un lien sélectionnable à des informations expliquant des possibilités d'utilisation et/ou de commande des fonctions et/ou des applications rendues disponibles par le terminal, le lien étant fourni par une base de données du réseau de télécommunication, dans lequel si le lien est sélectionné, les informations expliquant collectées et/ou stockées dans la base de données peuvent être transmises au terminal (1) par moyen d'un service du réseau de télécommunication et peuvent être reproduites par le dispositif d'affichage (2, 3).

28. Terminal (1) selon l'une des revendications 14 à 27, **caractérisé en ce que** celui-ci est un terminal (1) mobile fonctionnant dans des réseaux radio mobiles, de préférence un téléphone cellulaire (1).

29. Terminal (1) selon l'une des revendications 14 à 28, **caractérisé en ce que** celui-ci est configuré pour effectuer un procédé selon l'une des revendications 1 à 13.
